# EUROPEAN PATENT APPLICATION

(11) **EP 3 115 118 A1**
(43) Date of publication of application: **11.01.2017**
(21) Application number: 16168744.7
(22) Date of filing: 09.05.2016
(51) Int. Cl.: B09C 1/02, B09C 1/00, E01H 12/00, B03B 5/36, B03B 5/28, B03B 5/40, B08B 3/02, E01H 15/00, A01B 43/00, B08B 3/10, B08B 3/06

(54) **APPARATUS FOR REMOVING BIOMASSES FROM SAND**

(30) Priority: 08.05.2015 IT UB20150462
(71) Applicant: Acanthus Societa' Cooperativa, 09047 Selargius (CA) (IT)
(72) Inventor: GENNARO, Luca, 09064 SASSARI (SS) (IT)
(74) Representative: Tiburzi, Andrea

(57) **Abstract**

Apparatus (A) for removing sand from biomasses, such as weeds or oceanic Posidonia, comprising a collection station (M1), a containment tank (21) of said biomasses collected by a collection member (1) and an ejection member (22) of said biomasses contained in said containment tank (21), and a treatment station (M ₂ ) of said biomasses, to separate them from other material such as sand, comprising a main tank (23) with a load zone (B) of said biomasses coming from tank (21), a treatment module (L) of said biomasses loaded in said load zone (B) for cleaning, washing and drying said biomasses, and an ejection device (38) of said treated biomasses, said apparatus (A) being characterized in that said treatment module (L) comprises a washing unit of said biomasses for the elimination of the sand, arranged partially immersed in the water contained in said main tank (23).

## Description

The present invention relates to an apparatus for removing biomasses from sand.

More specifically, the invention concerns an apparatus of the above kind, studied and realized in particular to clean the sand from the oceanic Posidonia, commonly known as seaweed, but which can be used for any type of plant biomass stranded on the sand, for which removal is required from the sand itself.

In the following, the description will be directed to the removal of the oceanic Posidonia, but it is clear that the same should not be considered limited to this specific use.

As is well known, at present many coastal areas are contaminated by the stranding of Posidonia oceanic masses.

The oceanic Posidonia is a Mediterranean superior endemic plant.

The stranding phenomenon of parts of this plant, mainly of leaves thereof, at the end of their life cycle, normally takes place during the period from the beginning of autumn and the end of winter and it is favored by the combined action of marine and wind currents.

Generally, beached oceanic Posidonia, in the lower layers, is mixed with large quantities of sand of varying grain size, pebbles and shells.

If these organic residues were not properly removed from the shoreline before the arrival of the summer season, these would accumulate in blackish dunes, called "banquettes", which can reach heights of over one meter.

The presence of banquettes has always been considered a problem for the Municipal Authorities and the bathing establishments' managers, as it prevents the usability of the beaches during the summer season.

For this reason, every year the coastal Municipal Authorities most concerned by tourist flows ensure the removal of seaweed heaps.

Currently, the systems for collecting and removing oceanic Posidonia include heavy vehicles, such as mechanical shovels or excavators that remove not only the oceanic Posidonia but also large amounts of sand, causing considerable damage to the sensitive coastal environment.

Furthermore, said known collecting systems only perform the cleaning operation of the beaches from waste of various nature and are not suited to the removal of large quantities of oceanic Posidonia deposited on the shoreline.

A further disadvantage of the known collecting systems is represented by the fact that these remove also sand, shells, pebbles and other characteristic elements of the shore that must instead be preserved.

The US patent application US 2013/309014, the European patent application EP 1707680 and International Patent Application WO 2004/079099, concerning all of the seaweeds collection systems belong to the prior art.

In the light of the above, it is, therefore, object of the present invention to provide an apparatus for removing of the oceanic Posidonia or seaweeds in general, suitable to the structural characteristics of the different beaches.

Another object is to safeguard the environment and preserve the sensitive coastal equilibrium, during removal of the oceanic Posidonia.

A further object of the present invention is to provide an apparatus for the treatment, such as packaging, oceanic Posidonia or of gathered seaweeds, for the following transport to the destination places, and to a possible reuse.

It is also object of the present invention to propose an apparatus that is quick in the removal of oceanic Posidonia or seaweeds in general.

It is therefore specific object of the present invention an apparatus for removing sand from biomasses, such as weeds, oceanic Posidonia and the like, comprising a collection station, comprising a collection member of said biomasses, a containment tank of said biomasses collected by said collection member and an ejection member of said biomasses contained in said containment tank, and a treatment station of said biomasses, to separate them from other material such as sand, pebbles or shells, comprising a main tank wherein it is obtained a load zone of said biomasses coming from said containment tank, a treatment module of said biomasses loaded in said load zone for cleaning, washing and drying said biomasses, and an ejection device of said treated biomasses, said apparatus being characterized in that said said treatment module comprises a washing unit of said biomasses for the elimination of the sand, arranged partially immersed in the water contained in said main tank, said washing unit comprising a washing basket having a cylindrical shape, longitudinally arranged, at least partially immersed in the water contained in said treatment station, and having the external surface holed for the sand to be ejected, a rotating drum, arranged within said washing basket, rotating around its own axis to agitate said biomasses and to separate them form the sand, an internal screw, arranged within said rotating drum, said internal screw conveying said biomasses to be further cleaned, within said rotating drum and a centrifugation unit comprising in its turn a centrifugation basket, arranged on an upper level with respect to said washing basket, having a cylindrical shape, longitudinally arranged, and having the external surface holed for the residual water absorbed from said biomasses in said washing basket to be ejected, a conveyor capable to collect said biomasses form the bottom of said washing basket and to convey them in said centrifugation basket, and an external screw capable to convey said washed and centrifuged biomasses towards the exit zone of said apparatus for the ejection.

Futher according to the invention, said collection member of said collection station comprises a gripping device comprising a first and a second rotating drum capable to collect said biomasses, and a transport duct for transporting said biomasses collected by said gripping device in said containment tank.

Still according to the invention, said first and second rotating drum are counter-rotating respect to one another and they have on their one outer surface respectively a first and a second comb made of elastomeric type material to come into contact with said biomasses.

Preferably according to the invention, said transport duct comprises inside a first conveyor belt provided with reliefs, rotating around a first and a second pulley and having a first end, arranged close to said first and second drum, and a second end, arranged in correspondence of said containment tank, said first conveyor belt having holes.

Further according to the invention, said ejection device is a second conveyor belt, movable from a rest position, where said second conveyor belt receives said collected biomasses, to a working position, where, when activated, said second conveyor belt conveys said collected biomasses in said containment tank, towards said treatment station.

Still according to the invention, said treatment station comprises a main tank, that can be filled with salt water by pumping means, to collect said material, to be given back to sandy shores, coming from the treatment of said biomasses, and a main screw, arranged on the bottom of said main tank, to convey said material to be given back to sandy shores on the bottom of said main tank, towards an exit duct.

Preferably according to the invention, said load zone has a loading hopper, to charge said biomasses coming from said collection station, a first grid, arranged in correspondence of said loading hopper, to receive said biomasses discharged from said collection station, a plurality of agitators, arranged in correspondence of said first grid, to expand said biomasses loaded on the surface of said salt water of said main tank of said treatment station and to push said waste material towards said main screw, and a plurality of diffuser nozzles, arranged lower said first grid, said diffuser nozzles being able to produce air bubbles to keep afloat the biomasses having a density lower than density of salt water.

Further according to the invention, said internal screw rotates independently with respect to said rotating drum and said internal screw is provided, on its external surface, with a plurality of keyed blades, projected towards said washing basket and configured so as to separate the sand having fine granulometry, still adhering to said biomasses.

Preferably according to the invention, said rotating drum is provided with a plurality of perimetric flaps for charging and conveying said biomasses inside itself.

Still according to the invention, a plurality of nozzles for the ejection of salt water jets is arranged in proximity of said centrifugation basket, and said conveyor comprises a plurality of holed baskets for collecting said biomasses from the bottom of said washing basket so as to convey them towards said centrifugation basket.

Further according to the invention, said apparatus comprises a fixed basket arranged in correspondence of said exit zone of said apparatus, and a third conveyor belt, having a variable working angle, arranged so as to take said biomasses from said fixed basket and to discharge them from said apparatus.

Preferably according to the invention, said apparatus comprises a sea grabbing member comprising a floating, communicating with a water pipe, an electric pump supported by said floating and arranged ahead said water pipe, said electric pump being connected to said apparatus by a flexible duct.

Finally according to the invention, said collection station is a mobile collection machine, and said treatment station is a fixed treatment machine arranged in proximity of the foreshore.

The present invention will be now described, for illustrative but not limitative purposes, according to its preferred embodiments, with particular reference to the figures of the enclosed drawings, wherein:

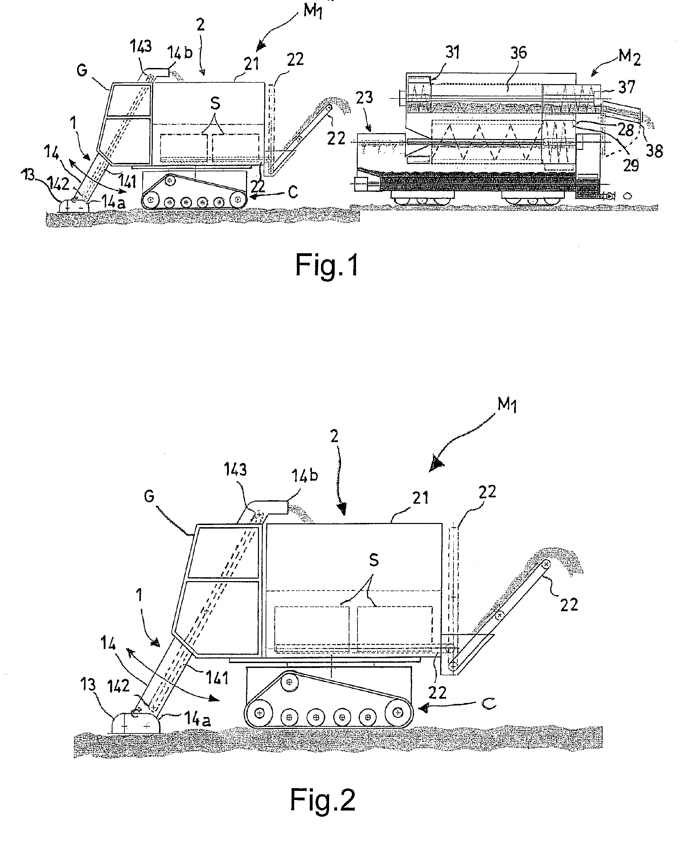

figure 1 shows a side view of the apparatus to clean the sand from biomass the invention object of the invention;
figure 2 shows a side view of a first machine of the apparatus of figure 1;

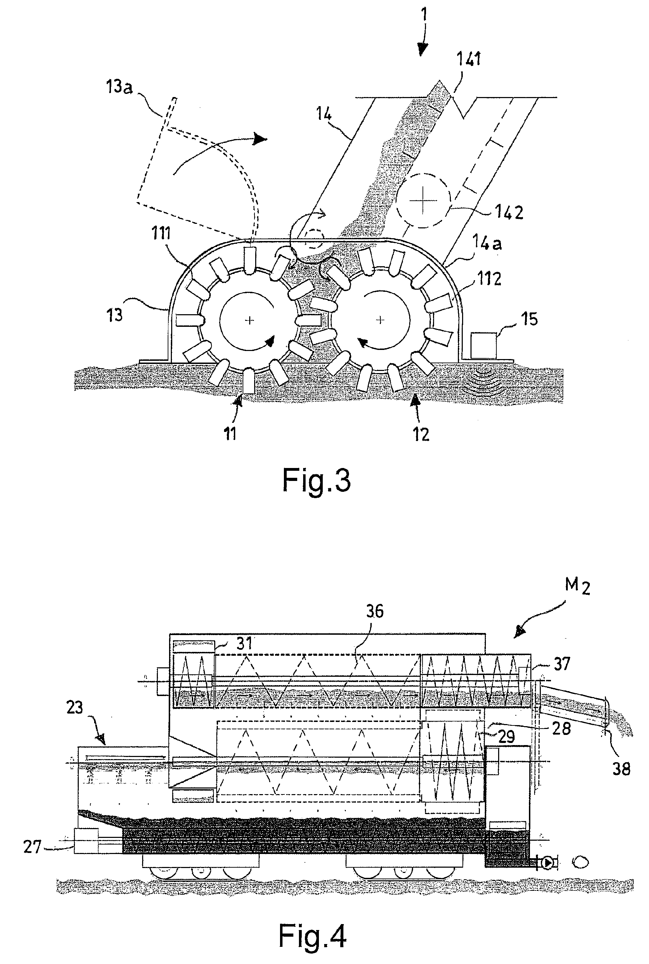

figure 3 shows a detail of the first machine of figure 2;
figure 4 shows a longitudinal section of a second machine of the apparatus to clean the sand from the biomass object of the invention;

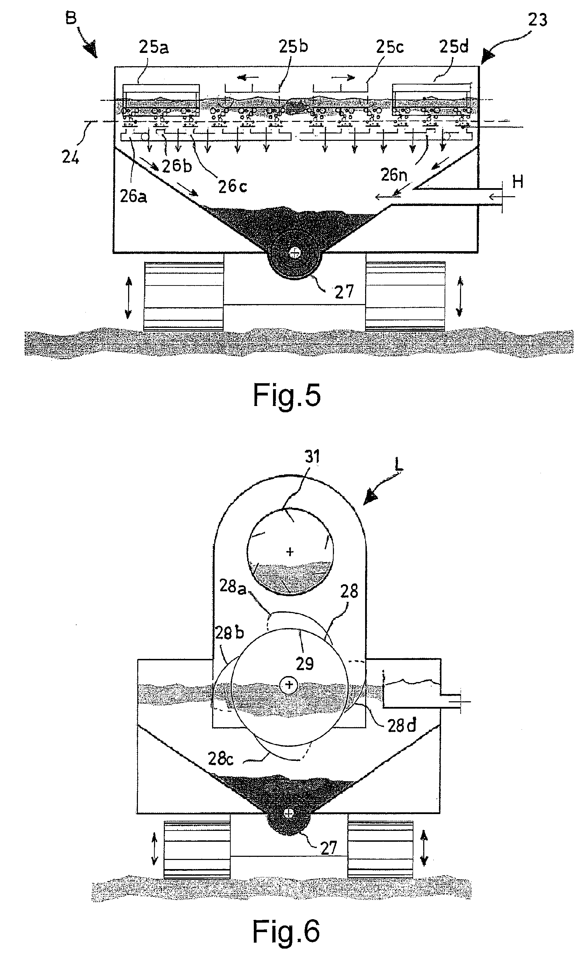

figure 5 shows a front cross section of a detail of the second machine of the apparatus object of the invention;
figure 6 shows a front cross section of a further detail of the second machine of the apparatus object of the invention;

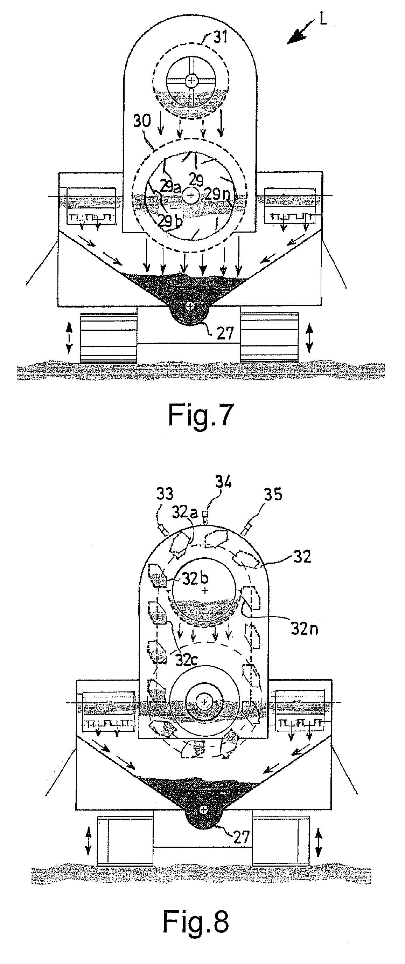

figure 7 shows a front cross section of a further detail of the second machine according to the apparatus object of the invention;
figure 8 shows a front cross section of a further detail of the second machine of the apparatus object of the invention; and
figure 9 shows a block diagram of the operation of the apparatus and of the process object of the invention.

In the various figures, similar parts will be indicated by the same reference numbers.

Referring to the attached figures, the apparatus A comprises a collection machine M₁, and a treatment machine M₂.

Said collection machine, M₁ is movable on rubber tracks C with more supporting wheels and it is controlled by an operator in a cabin guide G made of a support structure in fiberglass, polycarbonate and transparent surfaces steel reinforcements or aluminum alloy for protecting the operator in case of vehicle overturning.

The driver's seat is provided with at least a seat and a console comprising the tools and/or commands required for the actuation of said collection machine M₁, of mirrors and optical and acoustic signaling devices in case of reverse gear.

Said collection machine M₁ is powered by a bio-diesel engine, for the actuation of a pump unit that feeds all the hydraulic motors.

Said bio-diesel motor also drives an alternator for charging a sealed type battery without maintenance, necessary for starting the engine and for the actuation of all the electrical devices.

Said collection machine M₁ further includes a proportional type solenoid valves.

Said driving bio-diesel, pump and solenoid valves are contained in a soundproof compartment S to limit noise pollution.

Said collection machine M₁ also includes a remote control system to manage the operations of the machine in the absence of on-board operator if required for safety reasons.

Said collection machine M₁ includes a collection member 1 of oceanic Posidonia residues coupled with a hopper type containment tank 21.

In particular, said collection member 1 comprises a gripping device 13 communicating with a transport duct 14.

Said gripping device 13 comprises a first 11 and a second 12 drums, counter-rotating relative to one another.

Each drum has on the surface a comb, in particular, said first drum 11 has a first comb or combs 111 and said second drum has a second comb or combs 112.

Said first 111 and second 112 comb are made of elastomeric type material, in order to prevent any damage of the underlying rocks surfacing during the collection of oceanic Posidonia.

Said collection member 1 comprises a casing that protects said first 11 and second 12 drum.

Said casing has an opening portion 13a so as to allow said first 11 and second 12 drum to collect frontally even very high piles of algae.

Said transport duct 14 comprises a first conveyor belt 141, provided with reliefs, rotating around a first pulley 142 and second pulley 143.

Said first conveyor belt 141 is made of rubber, it is provided with holes to allow a partial release of the sand and it is completely enclosed inside a casing.

Said transport duct 14 has a first end 14a located in proximity of said first 11 and second 12 drum for the withdrawal of said oceanic Posidonia collected by said first 11 and second drum 12, and a second end 14b in correspondence of said hopper containment tank 21 for the release of said oceanic Posidonia.

Said gripping device 13 is rotating around said first end 14a of said transport duct 14.

Said collection member 1 comprises a sensor 15, for example of radar type, which detects the distance of said gripping device 13 from the underlying compact layer of sand and/or rocks, in order to prevent the impact between said gripping device 13 and the soil.

Said hopper containment tank 21 contains the oceanic Posidonia collected and, if present, pebbles and/or sand on the bottom and comprises a second conveyor belt 22.

The hopper-shape of said containment tank 21 allows the collected residues being deposited on the bottom, and then on said second conveyor belt 22.

Said second belt conveyor 22 is movable from a rest position, in which it receives the collected material, to a working position, in which it releases said collected material, from said rest position to said working position by manual or hydraulic actuators.

Said hopper containment tank 21 is made of fiberglass with steel reinforcements and/or aluminum alloy in correspondence of the most stressed points.

Said treatment machine M₂ is fixed and is placed generally close to the shoreline and a gripping member in the sea, which will be described in detail below, capable to convey the seawater within said treatment machine M₂, through a duct indicated with the letter H.

Said sea water is maintained at a constant level inside said M₂ treatment machine, by means of a weir with filtering grid.

Said treatment machine M₂ is made by the previously described materials for the collection machine M₁ and is actuated by a bio-diesel engine, solenoid valves and remote control system.

This also comprises a compressor for compressed air provided with tanks and the necessary elements for the air distribution and adjustment, baskets and stainless steel screws and watertight type components.

In particular, said treatment machine M₁ includes a main tank 23 to collect all the material to be returned to the beaches from the treatment of said oceanic Posidonia.

The initial portion of said main tank 23 is the loading area B of the material collected by said collection machine M₁.

Said treatment machine M₂ further comprises a washing and drying module L for the treatment of oceanic Posidonia, partially immersed within said main tank 23.

Said treatment machine M₂ comprises on the bottom of said main tank 23, a main screw 27 which conveys the decanted heavy materials on the bottom having a density greater than that of sea water such as pebbles, shells and sand, towards an outlet duct O for the releasing of said heavy materials in the sea or on the shore.

In particular, in said loading zone B there is a loading hopper 23a placed in the front part of said treatment machine M₂ within said main tank 23 to receive the collected material from said collecting machine M₁ by means of said second conveyor belt 22.

Said loading hopper 23a comprises a first grid 24 adapted to prevent the waste to sink due to the fall motion, a plurality of agitators 25a, 25b, ..., 25d, such as chains with scrapers, i.e. toothed pulleys that drive a plurality of blades connected to two chains, that scatter the residues of oceanic Posidonia on the water surface of the sea already entered and circulating in the machine from said sea gripping member.

Said treatment machine M₂ comprises a plurality of spray nozzles 26a, 26b, 26c, ..., 26n, placed in proximity of said grid 24, adapted to generate micro air bubbles for keeping afloat the materials with a density lower than that of the sea water.

Both the quantity and the pressure of the air emitted from said plurality of spray nozzles 26a, 26b, 26c, both the speed of said plurality of agitators 25a, 25b, ..., 25d and said main screw 27 can be adjusted with continuity by automatic control systems as a function of the characteristics of the input residues.

Said washing and drying module L comprises a rotating drum 28 provided with an internal screw 29 rotating independently with respect to said rotating drum 28.

Said rotating drum 28 has a plurality of perimeter flaps 28a, 28b, 28c, 28d, for loading and transporting of oceanic Posidonia inside it.

Said washing and drying module L includes a washing basket 30, containing said rotating drum 28 and said internal screw 29, in which the oceanic Posidonia is loaded by said internal screw 29.

Said internal screw 29 is provided, on its outer surface, with a plurality of keyed blades 29a, 29b, 29c, ..., 29n that are projected toward said perforated basket 30, to separate the sand of fine particle size, still attached to the oceanic Posidonia.

The rotating speed of said rotating drum 28 and internal screw 29 and the opening speed of said plurality of perimeter flaps 28a, 28b, 28c, 28d, can be adjusted with continuity through automatic control systems as a function of the characteristics of the residues in entrance.

Said washing and drying module L includes a centrifugation basket 31 placed on a higher level with respect to said washing drum 30, for the elimination of residual water coming from the washing cycle and the reduction of the final rate of humidity of the oceanic Posidonia.

Said washing and drying module L comprises a conveyor 32, comprising in its turn a plurality of holed baskets 32a, 32b, 32c, 32n.

Said plurality of holed baskets 32a, 32b, 32c, ..., 32n collect the oceanic Posidonia from the bottom of said washing drum 30 and carries it upwardly in the loading zone of said centrifugation basket 31.

In the proximity of said centrifugation basket 31 it is arranged a plurality of nozzles 33, 34, 35 for the emission of jets of seawater that flow downward through said plurality of holed baskets 32a, 32b, 32c, ..., 32n to facilitate cleaning and emptying.

Said treatment machine M₂ comprises an external screw 36, which conveys the oceanic Posidonia and washed with reduced moisture content towards the output zone of the apparatus A, in which it is present a bottom fixed basket 37.

Said bottom fixed basket 37 communicates with a third conveyor belt 38 with variable working angle to allow the discharge of the oceanic Posidonia by the apparatus A.

Said sea grabbing member 40 is required for supplying seawater that must be available in the immediate vicinity of said apparatus A.

Said sea grabbing member 40 comprises a float, made of fiberglass reinforcements with aluminum or its alloys, in correspondence of the most stressed or subject to usury points, also comprises a flexible delivery conduct supported by floating polyethylene and can be operated by electric components or actuated by means of an electronic control and internal to said float.

In particular, said float supports an electric open impeller type pump for dirty liquids capable of processing even water with the presence of any minor amounts of other materials in suspension, such as algae, sand, and the like.

Said electric pump is installed in the head of the discharge pipe and it is fed by a voltage of about 24 V.

Said electro pump is connected to said machine M₂ by a flexible conduct supported on the water by floats arranged along the length of said duct that houses the electrical and signal cables for the power supply and the control of on board of the floating equipment.

The lower central part of said float is protected by a grid with a mesh adapted to prevent the entry of coarse foreign bodies in proximity of the suction mouth of the pump.

Said member of to sea grabbing member 40 may also comprise an inertial or GPS type position controller, so that the working position, once reached, is automatically maintained without the external intervention of said operator.

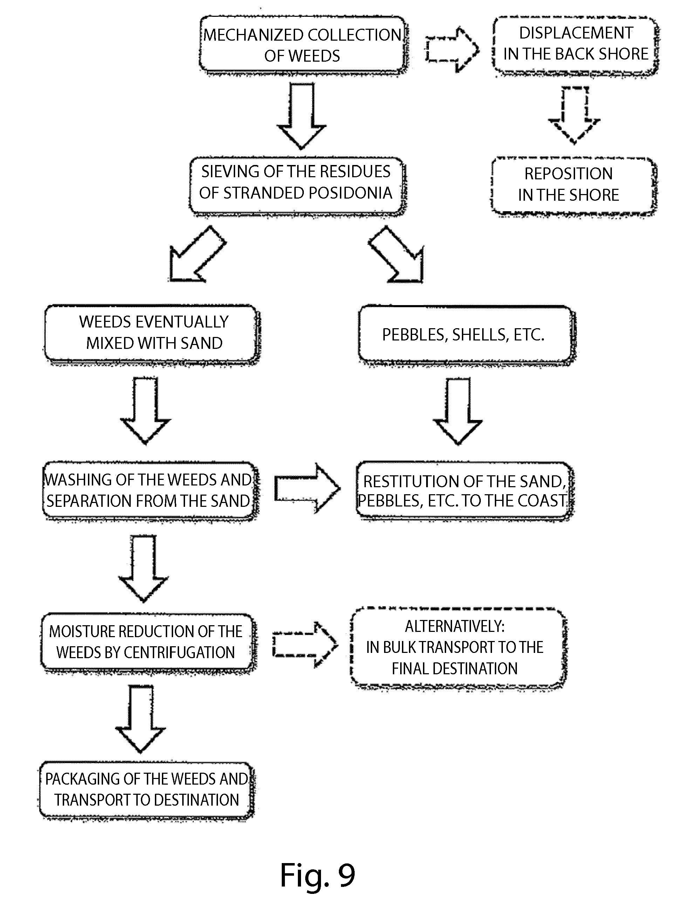

The operation of the apparatus A described above is as follows according to predetermined phases, shown in figure 9.

In a first mechanized collecting phase A of oceanic Posidonia, an operator in the cab G of said machine M₁ controls said collecting member 1 so that said first 11 and second 12 drum contact an amount of oceanic Posidonia to remove, by turning in the opposite respect to one another.

Said first 111 and second 112 comb respectively of said first 11 and second 12 drum shall collect the oceanic Posidonia along with other material such as sand, shells, pebbles and the like.

Said material is conveyed through said first conveyor belt 141 within said hopper containment tank 21.

Said material is deposited on said second conveyor belt 22 which, passing from the rest position to the operating position, discharge said material in said loading area B of said machine M₂, and in particular in said loading hopper 23a.

In a second sieving phase B of oceanic Posidonia, separating the oceanic Posidonia from other materials such as sand, shells, pebbles and the like is necessary.

Said grid 24 prevents the oceanic Posidonia sinks due to the fall motion.

The plurality of mixers 25a, 25b, 25c, 25d spreads the oceanic Posidonia residues on the seawater surface introduced into said machine M₂.

In the meantime, said plurality of spray nozzles 26a, 26b, 26c, ..., 26c emit micro air bubbles to keep afloat the materials with a density less than that of sea water, typically residues of oceanic Posidonia, wood fragments, egagropili and the like.

In this way, a first separation by settling towards the bottom of said machine M₂ of all the materials of density greater than that of seawater such as pebbles, shells and sand is obtained.

These materials are conveyed towards the rear part of said machine M₂ through said main screw 27.

By means of said plurality of agitators 25a, 25b, 25c, 25d, residues of Posidonia separated, totally or partially, from the sand are transported in water suspension, to the rear of said machine M₂ for the following treatment.

Depending on the grain size of the sand of the shoreline, the settling process is not sufficient for the separation of all of the sand present in the residues of Posidonia.

In fact, the particularly thin grain size sand is still partially adhering to the leaves of oceanic Posidonia and therefore must be eliminated with a more energetic action of mechanized washing.

If, however, in the case of particularly high granulometry residues of oceanic Posidonia are already totally free of sand, the washing step may be omitted and residues can cross quickly said machine M₂ to proceed to next treatment.

In a third washing phase C of oceanic Posidonia, the oceanic Posidonia residues to be treated by means of mechanized washing are loaded by said rotating drum 28, by means of said internal screw 29 inside said washing drum 30.

In a fourth phase D of separation of fine grain size sand from the oceanic Posidonia, the oceanic Posidonia residues with sand still adhering to the leaves undergo an energetic mechanized washing.

In particular, said Posidonia oceanic residues are axially transported by said internal screw 29 to said washing drum 30 and simultaneously, by the action of said plurality of keyed blades 29a, 29b, 29c, ..., 29n, are projected towards said washing basket 29.

Said washing drum 30, in its turn, turning in an alternating way, does fall on the longitudinal axis of said machine M₂ the residues, which then undergo a continuous and energetic mixing which allows the separation of the still present sand that falls towards the bottom of said machine M₂ through said drilled washing basket 30.

The displacement speed of the residues towards the front of said machine M₂ is determined by the difference of rotation speed between said internal screw 29 within the drum 30 and the speed of said washing basket 30 itself.

The sand coming from this treatment step is transported in the bottom of said machine M₂ from said main screw toward the rear of said machine M₂.

The washed residues are then carried toward the front of said machine M₂, where they will be collected to be subjected to the next treatment phase.

If, as previously mentioned, this washing step should not be performed, the residues can quickly reach the front part of said machine M₂ through the sole action of said internal screw 29, which will be actuated when the drum is stationary.

The action of mechanized washing, together with a reasonable amount of seawater replacement within said machine M₂, also allows a reduction of the salt content of oceanic Posidonia residues.

The residues of oceanic Posidonia now devoid of all traces of foreign materials, are conveyed, inside said washing drum 30, toward the front of said machine M₂ to be collected and transported to the upper level to be subjected to the subsequent phase of elimination of excess water and reduction of the moisture content.

In a fifth moisture reduction phase E, the loading takes place by means of said conveyor 32 which collects the residues from the bottom of said washing drum 30 and carries them upwardly in the loading zone of said centrifugation basket 31.

Since the centrifugal action disadvantages the emptying of said plurality of holed baskets 32a, 32b, 32c, ..., 32n, the mechanical action of strong jets of sea water coming from said plurality of nozzles 33, 34, 35 is used.

The water can easily flow away downwards, through said plurality of holed baskets 32a, 32b, 32c, ..., 32n and said loading hopper 23a, which is also holed.

In this stage the residues proceeds axially toward the rear side of said machine M₂, through the action of said internal screw 29 that rotates in a direction contrary to the rotation direction of said centrifugation basket 31.

The residues, forcefully projected outwards, progressively lose the excess water and reduce, therefore, the moisture content.

The centrifuge action can be regulated as a function of the rotational speed of said centrifugation basket 31.

Being said centrifugation basket 31 placed in a higher position of the washing water level, the excess water smoothly falls towards the bottom of said machine M₂.

In a sixth expulsion step F of Posidonia and restitution of discarded material, the residues of oceanic Posidonia, washed with a reduced moisture content from the previous step, are collected toward the rear of said machine M₂ from said internal screw 29.

Residues of oceanic Posidonia can then be carried out by said machine M₂ with said third conveyor belt 38.

For encumbrance reasons during the transport, said third conveyor belt 38 can be placed vertically.

The material deposited on the bottom of the machine M₂ is instead returned to the coast or, upon request, directly to the sea through said exit duct O, alternatively, it can be conveyed to said stacking machine M₁.

The equipment A implements a single process, whose ultimate aim is the separation of acidic component from the vegetal one.

Consider that there is a synergy between said first 11 and second 12 counter-rotating drum and the processor module L, comprising said internal screw 29 and external screw 36.

Preliminarily, it is necessary to consider the compactness of the layers (*banquettes*) of Posidonia deposited typically on the beach, which, due to the continuous overlapping of plant material, the repeated steps of wind drying and moistening by the tides, constipate this material mixed with sand making it extremely compact and solid.

The combined use of the above mentioned first 11 and second 12 counter-rotating drum and of said internal screw 29 and the external screw 36, allows an "unbundling" of the individual mineral and vegetable pieces, favoring the breakdown of the materials from the collection step, to continue in the treatment/wash step. The two systems are considered to be closely related and complementary, as the only screws 29 and 36 system would not be able to handle clusters of compact material without creating problems for the surrounding working bodies, while a separation operated by only the counter-rotating drums would be at least approximate.

In other words, the two above-mentioned systems, operating in correct order, separate gradually banquettes into individual elements, ensuring the washing of the sand from the whole "leaf surface" of the Posidonia, while each one of the two apparatuses individually would not be able to get the effect of ideal cleaning of Posidonia, making much less efficient operation of the apparatus A.

The desired result is achieved only through the combined use of the two systems, collection using said first 11 and second 12 counter-rotating drum and said internal screw 29 and external screw 36, that, operating synergistically, determine the improving effect of the operation performed by the entire machinery.

Said collecting machine M₁ can be equipped with a GPS system that records the path of said collecting machine M₁ during the collection phase, so that the return of the material such as sand, pebbles and shells, can take place in the same positions from where it was collected.

As regards the operation of said sea grabbing member 40, this enables the positioning of the sea water intake into the intake point chosen without the use of boats or other systems, because the sea water intake is autonomous, being provided with a system that allows the propulsion and the alignment variation.

The variation of the structure is obtained by the input or output of seawater within said float, which can then immerse themselves in the suction phase and emerge in the moving and positioning phase.

For the immersion of said float, an electrovalve on the bottom enters the water while the air inside said float exits from the electrovalve placed on the top; for the emergence, the same electrovalve on the bottom brings out the water that is driven by compressed air coming from a tank located within the same float and regulated by another electrovalve.

The propulsion for moving and positioning seawater intake in the desired place is via jet engines; these engines, taking the water from appropriate intakes suitably placed to be free of extraneous materials, move and position the seawater intake in the preset location.

As it is evident from the above description, said apparatus A for biomass removal allows removing biomass from the shoreline respecting the natural balance of the same and without removing important elements such as sand, pebbles and shells.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Apparatus (A) for removing sand from biomasses, such as weeds, oceanic Posidonia and the like, comprising
a collection station (M₁), comprising a collection member (1) of said biomasses, a containment tank (21) of said biomasses collected by said collection member (1) and an ejection member (22) of said biomasses contained in said containment tank (21), and
a treatment station (M₂) of said biomasses, to separate them from other material such as sand, pebbles or shells, comprising a main tank (23) wherein it is obtained a load zone (B) of said biomasses coming from said containment tank (21), a treatment module (L) of said biomasses loaded in said load zone (B) for cleaning, washing and drying said biomasses, and an ejection device (38) of said treated biomasses,
said apparatus (A) being **characterized in that** said said treatment module (L) comprises
a washing unit of said biomasses for the elimination of the sand, arranged partially immersed in the water contained in said main tank (23),
said washing unit comprising a washing basket (30) having a cylindrical shape, longitudinally arranged, at least partially immersed in the water contained in said treatment station (M₂), and having the external surface holed for the sand to be ejected, a rotating drum (28), arranged within said washing basket (30), rotating around its own axis to agitate said biomasses and to separate them form the sand,
an internal screw (29), arranged within said rotating drum (28), said internal screw (29) conveying said biomasses to be further cleaned, within said rotating drum (28) and
a centrifugation unit comprising in its turn a centrifugation basket (31), arranged on an upper level with respect to said washing basket (30), having a cylindrical shape, longitudinally arranged, and having the external surface holed for the residual water absorbed from said biomasses in said washing basket (30) to be ejected, a conveyor (32) capable to collect said biomasses form the bottom of said washing basket (30) and to convey them in said centrifugation basket (31), and an external screw (36) capable to convey said washed and centrifuged biomasses towards the exit zone of said apparatus (A) for the ejection.

2. Apparatus (A) according to the preceding claim, **characterized in that** said collection member (1) of said collection station (M₁) comprises
a gripping device (13) comprising a first (11) and a second (12) rotating drum capable to collect said biomasses, and
a transport duct (14) for transporting said biomasses collected by said gripping device (13) in said containment tank (21).

3. Apparatus (A) according to the preceding claim, **characterized in that** said first (11) and second (12) rotating drum are counter-rotating respect to one another and they have on their one outer surface respectively a first (111) and a second (112) comb made of elastomeric type material to come into contact with said biomasses.

4. Apparatus (A) according to any one of the preceding claim 2 or 3, **characterized in that** said transport duct (14) comprises inside a first conveyor belt (141) provided with reliefs, rotating around a first (142) and a second (143) pulley and having a first end (14a), arranged close to said first (11) and second (12) drum, and a second end (14b), arranged in correspondence of said containment tank (21), said first conveyor belt (141) having holes.

5. Apparatus (A) according to any one of the preceding claims, **characterized in that** said ejection device is a second conveyor belt (22), movable from a rest position, where said second conveyor belt (22) receives said collected biomasses, to a working position, where, when activated, said second conveyor belt (22) conveys said collected biomasses in said containment tank (21), towards said treatment station (M₂).

6. Apparatus (A) according to any one of the preceding claims, **characterized in that** said treatment station (M₂) comprises
a main tank (23), that can be filled with salt water by pumping means, to collect said material, to be given back to sandy shores, coming from the treatment of said biomasses, and
a main screw (27), arranged on the bottom of said main tank (23), to convey said material to be given back to sandy shores on the bottom of said main tank (23), towards an exit duct (O).

7. Apparatus (A) according to any one of the preceding claims, **characterized in that** said load zone (B) has
a loading hopper (23a), to charge said biomasses coming from said collection station (M₁),
a first grid (24), arranged in correspondence of said loading hopper (23a), to receive said biomasses discharged from said collection station (M₁),
a plurality of agitators (25a, 25b, ..., 25d), arranged in correspondence of said first grid (24), to expand said biomasses loaded on the surface of said salt water of said main tank (23) of said treatment station (M₂) and to push said waste material towards said main screw (27), and
a plurality of diffuser nozzles (26a, 26b, 26c, ..., 26n), arranged lower said first grid (24), said diffuser nozzles (26a, 26b, 26c, ..., 26n) being able to produce air bubbles to keep afloat the biomasses having a density lower than density of salt water.

8. Apparatus (A) according to the preceding claim, **characterized in that** said internal screw (29)
rotates independently with respect to said rotating drum (28) and
said internal screw (29) is provided, on its external surface, with a plurality of keyed blades (29a, 29b, 29c, ..., 29n), projected towards said washing basket (30) and configured so as to separate the sand having fine granulometry, still adhering to said biomasses.

9. Apparatus (A) according to any one of the preceding claims, **characterized in that** said rotating drum (28) is provided with a plurality of perimetric flaps (28a, 28b, 28c, 28d) for charging and conveying said biomasses inside itself.

10. Apparatus (A) according to any one of the preceding claims, **characterized**
**in that** a plurality of nozzles (33, 34, 35) for the ejection of salt water jets is arranged in proximity of said centrifugation basket (31), and
**in that** said conveyor (32) comprises a plurality of holed baskets (32a, 32b, 32c, ..., 32n) for collecting said biomasses from the bottom of said washing basket (30) so as to convey them towards said centrifugation basket (31).

11. Apparatus (A) according to any one of the preceding claims, **characterized by** comprising
a fixed basket (37) arranged in correspondence of said exit zone of said apparatus (A), and
a third conveyor belt (38), having a variable working angle, arranged so as to take said biomasses from said fixed basket (37) and to discharge them from said apparatus (A).

12. Apparatus (A) according to any one of the preceding claims, **characterized by** comprising a sea grabbing member (40) comprising a floating, communicating with a water pipe, an electric pump supported by said floating and arranged ahead said water pipe, said electric pump being connected to said apparatus (A) by a flexible duct.

13. Apparatus (A) according to any one of the preceding claims, **characterized**
**in that** said collection station is a mobile collection machine (M₁), and
**in that** said treatment station is a fixed treatment machine (M₂) arranged in proximity of the foreshore.
